# EUROPEAN PATENT APPLICATION

(11) **EP 4 383 793 A1**
(43) Date of publication of application: **12.06.2024**
(21) Application number: 22882540.2
(22) Date of filing: 20.09.2022
(51) Int. Cl.: H04W 24/02

(54) **METHOD AND APPARATUS FOR ACCESSING COMMUNICATION NETWORK**

(30) Priority: 20.10.2021 CN 202111221729
(71) Applicant: Huawei Technologies Co., Ltd., Shenzhen, Guangdong 518129 (CN)
(72) Inventor: TAN, Wei, Shenzhen, Guangdong 518129 (CN); YING, Bidi, Shenzhen, Guangdong 518129 (CN); YANG, Chenchen, Shenzhen, Guangdong 518129 (CN); ZHANG, Hang, Shenzhen, Guangdong 518129 (CN)
(74) Representative: MERH-IP Matias Erny Reichl Hoffmann Patentanwälte PartG mbB
(86) International application number: PCT/CN2022/119950
(87) International publication number: WO 2023/065929

(57) **Abstract**

The application provides a communication network access method and an apparatus. The method includes: A terminal device receives access control information sent by an access node, where the access control information includes a digital signature of the access node; the terminal device calculates a first value based on the digital signature of the access node and identification information of the terminal device; and the terminal device determines, based on the first value, whether to send access request information. According to technical solutions provided in the application, the terminal device determines, based on the first value, whether to initiate an access request, so that not only trusted access can be implemented, but also malicious behavior in a network can be avoided. This reduces access calculation overheads and ensures overall network efficiency.

## Description

This application claims priority to Chinese Patent Application No. 202111221729.8, filed with the China National Intellectual Property Administration on October 20, 2021, and entitled "COMMUNICATION NETWORK ACCESS METHOD AND APPARATUS", which is incorporated herein by reference in its entirety.

### TECHNICAL FIELD

The application relates to the communication field, and more specifically, to a communication network access method and an apparatus.

### BACKGROUND

A conventional random access protocol is designed for a scenario in which all devices are authenticated by a common operator, and the devices may trust each other.

However, a future network usually includes a large quantity of devices from different operators or manufacturers. In this environment, it is difficult for the devices, for example, a terminal device and an access node, to trust and cooperate with each other, and a consistent random access criterion is strictly followed. As a result, some malicious devices may ignore the random access criterion, and privately occupy access channel resources without a backoff time constraint to implement fast access.

### SUMMARY

Embodiments of the application provide a communication network access method and an apparatus. A terminal device determines, based on a first value, whether to initiate an access request, so that not only trusted access can be implemented, but also malicious behavior in a network can be avoided. This reduces access calculation overheads and ensures overall network efficiency.

According to a first aspect, a communication network access method is provided. The method may be performed by a terminal device, or may be performed by a chip, a chip system, or a circuit configured in the terminal device. This is not limited in the application. The following uses an example in which the method is performed by the terminal device for description.

The method may include: The terminal device receives access control information sent by an access node, where the access control information includes a digital signature of the access node; the terminal device calculates a first value based on the digital signature of the access node and identification information of the terminal device; and the terminal device determines, based on the first value, whether to send access request information.

According to the method in embodiments, the terminal device calculates the first value based on the digital signature of the access node and the identification information of the terminal device, and determines, based on the first value, whether to initiate an access request to the access node. The terminal device determines, based on the first value, whether to initiate the access request, or determines whether to send the access request information, or determines whether to access a communication network, thereby implementing trusted access. In addition, using the digital signature of the access node as one of calculation parameters can prevent the terminal device from forging the first value to meet an access condition. In addition, because identification information of each terminal device is unique to the terminal device, calculating the first value based on the digital signature of the access node and in combination with the identification information of the terminal device can ensure, as much as possible, that a first value calculated by each terminal device is difficult to forge, so that the terminal device and the access node can trust each other, thereby avoiding unauthorized access of a malicious node in a network.

With reference to the first aspect, in some implementations of the first aspect, that the terminal device determines, based on the first value, whether to send access request information includes: When the first value meets a first rule, the terminal device sends the access request information to the access node, where the access request information includes the identification information of the terminal device.

According to the method in embodiments, the first rule is set, so that a terminal device that does not meet the access condition in the network cannot initiate the access request to the access node temporarily. This prevents some malicious devices from ignoring a random access criterion and privately occupying access channel resources without a backoff time constraint to implement fast access. In addition, according to the method in embodiments, value calculation may be directly performed once to determine whether to initiate the access request, so that access calculation overheads are reduced while malicious behavior is avoided, and overall efficiency of the network is ensured.

With reference to the first aspect, in some implementations of the first aspect, the method further includes: The terminal device receives first response information sent by the access node, where the first response information includes information about a time-frequency resource allocated by the access node to the terminal device.

According to the method in embodiments, when the terminal device initiates the access request to the access node and the access node allows access of the terminal device, the terminal device receives the first response information sent by the access node, where the first response information includes the information about the time-frequency resource allocated by the access node to the terminal device. Therefore, if the terminal device successfully performs access, subsequent data transmission can be performed between the terminal device and the access node based on the time-frequency resource allocated by the access node.

With reference to the first aspect, in some implementations of the first aspect, that the terminal device determines, based on the first value, whether to send access request information includes: When the first value does not meet a first rule, the terminal device waits for initiating an access request next time.

For example, when the terminal device initiates the access request to the access node but the access node rejects access of the terminal device, the terminal device receives second response information sent by the access node, where the second response information indicates the terminal device to wait for initiating the access request next time.

According to the method in embodiments, a time interval at which the terminal device re-initiates the access request may be preset. In this case, if the first value obtained by the terminal device through calculation does not meet the first rule, the terminal device recalculates the first value after the preset time interval, and redetermines whether the first rule is met. Alternatively, a plurality of time periods in which the terminal device is allowed to initiate the access request may be specified in advance. If the first value obtained by the terminal device through calculation in a current time period does not meet the first rule, the terminal device recalculates the first value in a next time period and redetermines whether the first rule is met. Alternatively, the terminal device may determine, based on an actual requirement, when to recalculate the first value and redetermine whether the first rule is met. Alternatively, another manner may indicate when the terminal device reinitiates the access request. This is not limited in the application.

With reference to the first aspect, in some implementations of the first aspect, the first rule includes: The first value is less than a first threshold.

According to the method in embodiments, the first rule may be defined as: The first value is less than the first threshold. In other words, when the first value calculated by the terminal device is less than the first threshold, the terminal device sends the access request information to the access node. In the case, a smaller first threshold indicates higher difficulty in initiating the access request by the terminal device, and a larger first threshold indicates lower difficulty in initiating the access request by the terminal device.

It should be understood that the first threshold may be adjusted based on a current access case and an actual requirement. For example, in the foregoing case, when there are an excessively large quantity of terminal devices that request access and contention is excessively fierce, the first threshold may be adjusted downwards to make it more difficult for the devices to perform access; on the contrary, when there are a small quantity of terminal devices that request access, and contention is small, or there is no contention, the first threshold may be adjusted upwards to make it easier for the terminal devices to perform access, to implement flexible control on a quantity of accessed terminal devices by the access node.

It should be understood that the first rule may be further defined as that the first value is greater than a threshold (or falls within a threshold range, or the like), or defined as another determining condition. This is not limited in the application.

With reference to the first aspect, in some implementations of the first aspect, that the terminal device calculates a first value based on the digital signature of the access node and identification information of the terminal device includes: The terminal device calculates the first value based on a one-way function about the digital signature of the access node and the identification information of the terminal device.

According to the method in embodiments, the first value is obtained through calculation by using the one-way function about the digital signature of the access node and the identification information of the terminal device. In the case, a calculation formula of the first value may be expressed as: first value=one-way function (the digital signature of the access node and the identification information of the terminal device). Because the one-way function has characteristics of a simple calculation method, a small calculation amount, and a unique and irreversible calculation result, the first value is calculated by using the one-way function, and then the first value is compared with the first threshold, so that calculation overheads in an access process can be reduced, and the device in the network can fairly perform network access in an untrusted environment.

Optionally, the foregoing one-way function may be a message digest (message digest, MD) algorithm, a secure hash (secure hash, SH) algorithm, or the like. In addition, the terminal device may further calculate the first value by using another function having a similar characteristic. This is not limited in the application.

With reference to the first aspect, in some implementations of the first aspect, the access control information further includes one or more of the following information: the first threshold, identification information of the access node, group identification information, and a timestamp.

According to the method in embodiments, the first threshold may be adjusted based on the current access case and the actual requirement. For example, in a case in which the first rule is defined as that the first value is less than the first threshold, when there are an excessively large quantity of terminal devices that request access and contention is excessively fierce, the first threshold may be adjusted downwards to make it more difficult for the devices to perform access; on the contrary, when there are a small quantity of terminal devices that request access, and contention is small, or there is no contention, the first threshold may be adjusted upwards to make it easier for the terminal devices to perform access, to implement flexible control on the quantity of accessed terminal devices by the access node.

According to a second aspect, a communication network access method is provided, including: An access node sends access control information to a terminal device, where the access control information includes a digital signature of the access node; the access node receives access request information sent by the terminal device, where the access request information includes identification information of the terminal device; the access node calculates a first value based on the identification information of the terminal device and the digital signature of the access node; and the access node determines, based on the first value, whether the terminal device is capable of performing access.

According to the method in embodiments, a parameter and a calculation method that are used by the access node to calculate the first value should be consistent with a parameter and a calculation method that are used by the terminal device to calculate the first value, to verify whether a calculation result of the terminal device is correct, and further determine whether the terminal device meets an access condition. By verifying whether the calculation result of the terminal device is correct, a second barrier that prevents unauthorized access of a malicious node can be formed.

With reference to the second aspect, in some implementations of the second aspect, that the access node determines, based on the first value, whether the terminal device is capable of performing access includes: When the first value meets a first rule, the access node determines that the terminal device is capable of performing access.

According to the method in embodiments, after completing calculation of the first value, the access node determines that the first value meets the first rule, to determine that the terminal device is capable of performing access. Therefore, unauthorized access of the malicious node can be further prevented.

With reference to the second aspect, in some implementations of the second aspect, when the first value meets the first rule, that the access node determines that the terminal device is capable of performing access includes: When the first value meets the first rule, and the access node is capable of allocating a time-frequency resource to the terminal device, the access node determines that the terminal device is capable of performing access.

According to the method in embodiments, when the access node determines whether the terminal device is capable of performing access, whether the access node is capable of allocating the time-frequency resource to the terminal device is one of consideration factors, so that a success rate of accessing a communication network by a terminal device that meets the access condition can be improved.

With reference to the second aspect, in some implementations of the second aspect, the method further includes: The access node sends first response information to the terminal device, where the first response information includes information about the time-frequency resource allocated by the access node to the terminal device.

According to the method in embodiments, when the terminal device initiates an access request to the access node and the access node allows access of the terminal device, the access node sends the first response information to the terminal device, where the first response information includes the information about the time-frequency resource allocated by the access node to the terminal device. Therefore, if the terminal device successfully performs access, subsequent data transmission can be performed between the terminal device and the access node based on the time-frequency resource allocated by the access node.

With reference to the second aspect, in some implementations of the second aspect, the first rule includes: The first value is less than a first threshold.

According to the method in embodiments, the first rule may be defined as: The first value is less than the first threshold. In other words, when the first value calculated by the terminal device is less than the first threshold, the access node determines that the terminal device is capable of performing access. The first rule may be further defined as that the first value is greater than a threshold (or falls within a threshold range, or the like), or defined as another determining condition. This is not limited in the application. It should be understood that the first threshold may be adjusted based on a current access case and an actual requirement.

With reference to the second aspect, in some implementations of the second aspect, the access node calculates the first value based on a one-way function about the identification information of the terminal device and the digital signature of the access node.

According to the method in embodiments, a one-way function used by the access node to calculate the first value should be consistent with a one-way function used by the terminal device to calculate the first value, to verify whether a calculation result of the terminal device is correct, and further determine whether the terminal device meets the access condition. Because the one-way function has characteristics of a simple calculation method, a small calculation amount, and a unique and irreversible calculation result, the first value is calculated by using the one-way function, and then the first value is compared with the first threshold, so that calculation overheads in an access process can be reduced, and the device in the network can fairly perform network access in an untrusted environment.

With reference to the second aspect, in some implementations of the second aspect, the access control information further includes one or more of the following information: the first threshold, identification information of the access node, group identification information, and a timestamp.

According to the method in embodiments, the first threshold may be adjusted based on the current access case and the actual requirement. For example, in a case in which the first rule is defined as that the first value is less than the first threshold, when there are an excessively large quantity of terminal devices that request access and contention is excessively fierce, the first threshold may be adjusted downwards to make it more difficult for the devices to perform access; on the contrary, when there are a small quantity of terminal devices that request access, and contention is small, or there is no contention, the first threshold may be adjusted upwards to make it easier for the terminal devices to perform access, to implement flexible control on a quantity of accessed terminal devices by the access node.

According to a third aspect, a terminal device is provided, including a transceiver unit and a processing unit. The transceiver unit is configured to receive access control information sent by an access node, where the access control information includes a digital signature of the access node; the processing unit is configured to calculate a first value based on the digital signature of the access node and identification information of the terminal device; and the processing unit is further configured to determine, based on the first value, whether to send access request information.

With reference to the third aspect, in some implementations of the third aspect, when the processing unit is configured to determine that the first value meets a first rule, the transceiver unit is further configured to send the access request information to the access node, where the access request information includes the identification information of the terminal device.

With reference to the third aspect, in some implementations of the third aspect, the transceiver unit is further configured to receive first response information sent by the access node, where the first response information includes information about a time-frequency resource allocated by the access node to the terminal device.

With reference to the third aspect, in some implementations of the third aspect, when the processing unit is configured to determine that the first value does not meet a first rule, the terminal device waits for initiating an access request next time.

With reference to the third aspect, in some implementations of the third aspect, the first rule includes: The first value is less than a first threshold.

With reference to the third aspect, in some implementations of the third aspect, the processing unit is configured to calculate the first value based on a one-way function about the digital signature of the access node and the identification information of the terminal device.

With reference to the third aspect, in some implementations of the third aspect, the access control information further includes one or more of the following information: the first threshold, identification information of the access node, group identification information, and a timestamp.

According to a fourth aspect, an access node is provided, including a transceiver unit and a processing unit. The transceiver unit is configured to send access control information to a terminal device, where the access control information includes a digital signature of the access node; the transceiver unit is further configured to receive access request information sent by the terminal device, where the access request information includes identification information of the terminal device; the processing unit is configured to calculate a first value based on the identification information of the terminal device and the digital signature of the access node; and the processing unit is further configured to determine, based on the first value, whether the terminal device is capable of performing access.

With reference to the fourth aspect, in some implementations of the fourth aspect, when the first value meets a first rule, the processing unit is configured to determine that the terminal device is capable of performing access.

With reference to the fourth aspect, in some implementations of the fourth aspect, when the first value meets the first rule, and the access node is capable of allocating a time-frequency resource to the terminal device, the processing unit is configured to determine that the terminal device is capable of performing access.

With reference to the fourth aspect, in some implementations of the fourth aspect, the transceiver unit is further configured to send first response information to the terminal device, where the first response information includes information about the time-frequency resource allocated by the access node to the terminal device.

With reference to the fourth aspect, in some implementations of the fourth aspect, the first rule includes: The first value is less than a first threshold.

With reference to the fourth aspect, in some implementations of the fourth aspect, the processing unit is configured to calculate the first value based on a one-way function about the identification information of the terminal device and the digital signature of the access node.

With reference to the fourth aspect, in some implementations of the fourth aspect, the access control information further includes one or more of the following information: the first threshold, identification information of the access node, group identification information, and a timestamp.

According to a fifth aspect, a computer-readable storage medium is provided. The computer-readable medium stores program code executed by a device, and the program code includes instructions used to perform the method according to any one of the possible implementations of the first aspect or the second aspect.

According to a sixth aspect, a computer program product is provided. When the computer program product is run on a computer, the computer is enabled to perform the method according to any one of the possible implementations of the first aspect or the second aspect.

According to a seventh aspect, a communication apparatus is provided. The apparatus is configured to perform the method provided in the first aspect. Specifically, the apparatus may include units and/or modules configured to perform the method provided in any one of the implementations of the first aspect, for example, a processing unit and/or a communication unit.

In an implementation, the apparatus is a terminal device. When the apparatus is the terminal device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in the terminal device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to an eighth aspect, a communication apparatus is provided. The apparatus is configured to perform the method provided in the second aspect. Specifically, the apparatus may include units and/or modules configured to perform the method provided in any one of implementations of the second aspect, for example, a processing unit and/or a communication unit.

In an implementation, the apparatus is an access node. When the apparatus is the access node, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in the access node. When the apparatus is the chip, the chip system, or the circuit used in the access node, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a ninth aspect, a communication apparatus is provided. The apparatus includes at least one processor, configured to execute a computer program or instructions stored in a memory, to perform the method provided in any one of the implementations of the first aspect. Optionally, the communication apparatus further includes a memory, configured to store a program.

In an implementation, the apparatus is a terminal device.

In another implementation, the apparatus is a chip, a chip system, or a circuit used in the terminal device.

According to a tenth aspect, a communication apparatus is provided. The apparatus includes at least one processor, configured to execute a computer program or instructions stored in a memory, to perform the method provided in any one of the implementations of the second aspect. Optionally, the communication apparatus further includes a memory, configured to store a program.

In an implementation, the apparatus is an access node.

In another implementation, the apparatus is a chip, a chip system, or a circuit used in the access node.

According to an eleventh aspect, the application provides a processor, configured to perform the method provided in each of the foregoing aspects.

Operations such as sending and obtaining/receiving performed by the processor may be understood as operations such as outputting and receiving or inputting performed by the processor unless otherwise specified or if the operations does not conflict with an actual function or internal logic of the operations in a related description, or may be understood as sending and receiving operations performed by a radio frequency circuit and an antenna. This is not limited in the application.

According to a twelfth aspect, a chip is provided. The chip includes a processor and a communication interface. The processor reads, through the communication interface, instructions stored in a memory, to perform the method provided in any one of the implementations of the first aspect or the second aspect.

Optionally, in an implementation, the chip further includes the memory, the memory stores computer programs or the instructions, and the processor is configured to execute the computer programs or the instructions stored in the memory. When the computer programs or the instructions are executed, the processor is configured to perform the method provided in any one of the implementations of the first aspect or the second aspect.

According to a thirteenth aspect, a communication system is provided, including the foregoing access node and the foregoing terminal device.

### BRIEF DESCRIPTION OF DRAWINGS

FIG. 1 is a schematic diagram of a system architecture applicable to a communication network in the application;
FIG. 2 is a schematic diagram of a communication network access method according to an embodiment of the application;
FIG. 3 is a schematic diagram of another communication network access method according to an embodiment of the application;
FIG. 4 is a schematic diagram of another communication network access method according to an embodiment of the application;
FIG. 5 is a schematic diagram of an access node selection method according to an embodiment of the application;
FIG. 6 is a schematic block diagram of a communication apparatus according to an embodiment of the application; and
FIG. 7 is a schematic block diagram of another communication apparatus according to an embodiment of the application.

### DESCRIPTION OF EMBODIMENTS

The following describes technical solutions in embodiments of the application with reference to accompanying drawings.

The technical solutions provided in the application may be applied to various communication systems such as a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in the application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), and an Internet of Things (Internet of Things, IoT) communication system or another communication system. The technical solutions in embodiments of the application may be further applied to a future communication system, for example, a 6th generation (6th generation, 6G) system.

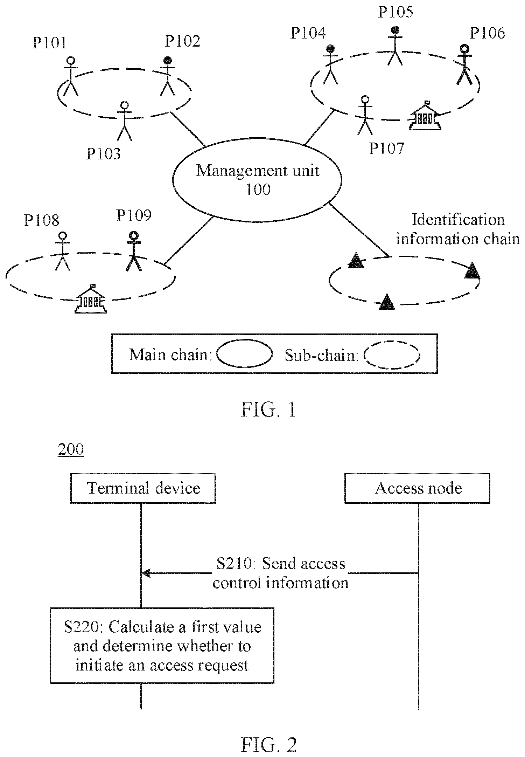

FIG. 1 is a schematic diagram of a system architecture applicable to a communication network in the application. As shown in FIG. 1, the communication network includes a management unit 100 and a plurality of devices P101 to P109 that participate in access in the network. Devices with a same icon represent devices from a same operator. For example, devices P101, P103, P107, and P108 are from an operator #1, devices P102, P104, and P105 are from an operator #2, and devices P106 and P109 are from an operator #3.

It should be understood that the foregoing devices may be access nodes, or may be terminal devices.

The terminal device in embodiments of the application may refer to user equipment, an access terminal, a subscriber unit, a subscriber station, a mobile station, a mobile console, a remote station, a remote terminal, a mobile device, a user terminal, a terminal, a wireless communication device, a user agent, or a user apparatus. The terminal device may also be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, or another processing device connected to a wireless modem, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), or a wireless terminal in a smart grid (smart grid), a wireless terminal in transportation safety (transportation safety), a wireless terminal in a smart city (smart city), a wireless terminal in a smart home (smart home), a vehicle-mounted device, an unmanned aerial vehicle device, a wearable device, a terminal device in a future 6G network, a terminal device in a future evolved public land mobile network (public land mobile network, PLMN), or the like. This is not limited in embodiments of the application. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that are dedicated to only one type of application function and need to work with other devices such as smartphones, such as various smart bands or smart jewelry for monitoring physical signs.

The access node in embodiments of the application may be a device configured to communicate with the terminal device. The access node may be a macro base station, a micro base station (also referred to as a small cell), a satellite, a radio network controller (radio network controller, RNC), a nodeB (nodeB, NB), a base station controller (base station controller, BSC), a base transceiver station (base transceiver station, BTS), a home base station, (for example, a home evolved nodeB or a home nodeB, HNB), a base band unit (base band unit, BBU), an AP in a Wi-Fi system, a wireless relay node, a wireless backhaul node, a transmission point (transmission point, TP), a transmission and reception point (transmission and reception point, TRP), or the like. Alternatively, the access node may be a gNB or a transmission point (TRP or TP) in a 5G system like an NR system, may be an antenna panel or a group of antenna panels (including a plurality of antenna panels) of a base station in a 5G system, or may be a network node, like a distributed unit (distributed unit, DU), that constitutes a gNB or a transmission point. Alternatively, the access node may be a relay station, an access point, a vehicle-mounted device, a wearable device, a network device in a future 6G network, a network device in a future evolved PLMN network, or the like. This is not limited in embodiments of the application. A specific technology and a specific device form used by the access node are not limited in embodiments of the application.

In embodiments of the application, the access node and the terminal device may be deployed on land, including indoor, outdoor, handheld, or vehicle-mounted, or may be deployed on a water surface, or may be deployed on an airplane, a balloon, or a satellite in the air. A scenario in which the access node and the terminal device are located is not limited in embodiments of the application.

It should be understood that FIG. 1 is merely a simplified schematic diagram used as an example for ease of understanding. The communication system may further include another network device or another terminal device that is not shown in FIG. 1.

In some communication networks, different devices may belong to different operators rather than a single operator. The following uses a possible networking manner as an example for description. In a case of no ambiguity, the application is described by using a 6G network.

Spatially, the 6G network may include space, sky, land, and sea. In terms of device composition, the 6G network includes a plurality of devices. Actual network carriers may include medium-low-altitude platforms such as satellite networks and unmanned aerial vehicles, cellular networks, Internet of Vehicles, IoT networks, and water and underwater networks. 6G network terminals are an important part of supporting 6G service applications. 6G networks extend forms and functions of 5G communication terminals. The 6G network terminals include but are not limited to vehicles, cellular network terminals (integrated with satellite terminal functions), unmanned aerial vehicles, and IoT. In addition, capabilities of the 6G network terminals are enhanced compared with those of 5G network terminals. For example, a computing capability and a communication capability of vehicles are greatly improved, which can meet a basic requirement of blockchain running. In addition, a blockchain designed based on the 6G network may support more types of terminals.

The 6G network features cross-industry and in-depth participation of a plurality of devices. Different devices in the network can provide different businesses and services. Different devices may belong to different operators rather than a single operator. Therefore, the 6G network requires a mechanism and platform for mutual trust between a plurality of parties.

The blockchain technology essentially changes a trust logic of human society and can well meet the preceding requirements of the 6G network.

A blockchain is a distributed ledger that integrates a plurality of technologies such as a cryptography technology, a peer-to-peer (peer-to-peer, P2P) network, and a distributed database. The blockchain is a type of a distributed ledger that generates and stores data in a unit of a block (block), and connects the data into a chain (chain) data structure in a time sequence. All nodes jointly participate in data verification, storage, and maintenance of a blockchain system. Creation of a new block needs to be consented, and is broadcast to each node to implement network-wide synchronization. Subsequently, it is difficult to change or delete the block. Therefore, a lack of a trust capability in a communication network can be effectively filled by using a natural trust attribute of the blockchain.

However, after the blockchain is introduced to the 6G network, a performance overhead problem caused by convergence of the blockchain and the 6G network needs to be further resolved. In a conventional blockchain technology, devices reach consensus and mutual trust through complex calculation such as data mining, to avoid occurrence of malicious behavior in a network and prevent congestion of a shared channel. However, for a wireless network with limited resources, information transmission between nodes and a large quantity of calculation overheads of the nodes are unacceptable.

In view of this, the application provides a solution in which a terminal device determines, based on a first value, whether to initiate an access request, so that not only trusted access can be implemented, but also malicious behavior in a network can be avoided. This reduces access calculation overheads and ensures overall network efficiency.

The following describes in detail a communication method provided in embodiments of the application with reference to the accompanying drawings. Embodiments provided in the application may be applied to the network architecture shown in FIG. 1. This is not limited.

FIG. 2 is a schematic diagram of a communication network access method according to an embodiment of the application. The method may include steps S210 and S220.

S210: An access node sends access control information to a terminal device.

Correspondingly, the terminal device receives the access control information.

The access control information may be, for example, used by the terminal device to access the access node, or may be used by the terminal device to determine whether to initiate an access request to the access node.

For example, the access control information may include one or more of the following information: a digital signature of the access node, a first threshold, identification information of the access node, group identification information, and a timestamp.

The digital signature of the access node may be used by the terminal device or the access node to calculate a first value. The first value may be used by the terminal device to determine whether to initiate the access request, and may be further used by the access node to determine whether the terminal device is capable of performing access.

The first threshold may be used by the terminal device to determine whether the terminal device sends access request information to the access node, or may be further used by the access node to determine whether to allow the terminal device to perform access. The first threshold may be a value, or may be a value range. This is not limited.

The identification information of the access node may be used to identify an identity of the access node. The group identification information may be used to identify a group to which the access node belongs. Optionally, before calculating the first value, the terminal device may identify, based on the group identification information, whether the terminal device and the access node belong to a same group. If the terminal device and the access node belong to the same group, the terminal device calculates the first value and determines, based on the first value, whether to initiate the access request. The identification information of the access node may be further used to calculate the first value.

The timestamp may be used to record a moment, and the moment may be a moment generated when the access node sends the access control information, or may be any specified moment. The timestamp may be used to calculate the first value.

S220: The terminal device calculates the first value, and then determines, based on the first value, whether to initiate the access request to the access node.

The first value may be used by the terminal device to determine whether the terminal device meets a condition for initiating the access request to the access node, or may be further used by the access node to determine whether the terminal device is capable of performing access. The first value may be a value, or may be a value range, or may be in another form. This is not limited.

That the terminal device determines, based on the first value, whether to initiate the access request to the access node may be understood as that the terminal device initiates or does not initiate, based on the first value, the access request to the access node, or may be understood as that the terminal device determines, based on the first value, whether to access the access node. For example, that the terminal device determines, based on the first value, to initiate the access request to the access node indicates that the terminal device initiates the access request to the access node based on the first value, or the terminal device accesses the access node based on the first value.

According to embodiments of the application, the terminal device and the access node no longer need to reach consensus through complex calculation such as data mining, and may determine, by performing value calculation once, whether to initiate the access request, so that access calculation overheads are reduced while malicious behavior is avoided, and overall efficiency of the network is ensured.

Optionally, the terminal device may determine, based on the first value and according to a first rule, whether to initiate the access request to the access node.

The first rule is set, so that a terminal device that does not meet the condition for initiating the access request cannot initiate the access request to the access node temporarily. This prevents some malicious devices from ignoring a random access criterion and privately occupying access channel resources without a backoff time constraint to implement fast access.

In a possible implementation, the first rule may be defined as: The first value is less than a first threshold.

The first threshold may be a value, or may be a value range. This is not limited.

The first threshold may be a fixed value predefined in a protocol, or may be a value generated according to a predefined rule, or may be a preconfigured fixed value, or may be a dynamically configured value. The terminal device may pre-store the first threshold, or the first threshold may be notified by the access node to the terminal device. For example, the first threshold may be carried in the access control information.

For example, the first threshold may be configured or adjusted based on a current access case and an actual requirement. For example, when there are an excessively large quantity of terminal devices that request access and contention is excessively fierce, the first threshold may be adjusted downwards to make it more difficult for the devices to perform access; on the contrary, when there are a small quantity of terminal devices that request access, and contention is small, or there is no contention, the first threshold may be adjusted upwards to make it easier for the terminal devices to perform access, to implement flexible control on a quantity of accessed terminal devices by the access node. It should be further understood that different first thresholds may be set for different groups in the network based on actual situations of the groups, to meet different application requirements of the groups.

It should be understood that the application is mainly described by using an example in which the first rule is that the first value is less than the first threshold. The application is not limited thereto. For example, the first rule may be further defined as that the first value is greater than a threshold (or falls within a threshold range, for example, falls within an interval), or defined as another determining condition. This is not limited in the application.

In a possible case, when the first value meets the first rule, the terminal device sends the access request information to the access node. For example, the access request information may include identification information of the terminal device and/or a digital signature of the terminal device. Correspondingly, the access node receives the access request information.

For example, when the first value calculated by the terminal device is less than the first threshold, the terminal device sends the access request information to the access node. In the case, a smaller first threshold indicates higher difficulty in initiating the access request by the terminal device, and a larger first threshold indicates lower difficulty in initiating the access request by the terminal device.

In the case, after the access node receives the access request information, the access node may determine, based on the first value, whether the terminal device is capable of performing access. For example, when the first value meets the first rule, the access node determines that the terminal device is capable of performing access. For another example, when the first value meets the first rule, and the access node is capable of allocating a time-frequency resource to the terminal device, the access node determines that the terminal device is capable of performing access.

In another possible case, when the first value does not meet the first rule, the terminal device waits for initiating the access request next time.

For example, when the first value does not meet the first rule, the terminal device initiates the access request after a time interval T. It may be understood that, after the time interval T, that the terminal device definitely sends the access request information to the access node is not limited in the application. In other words, after the time interval T, the terminal device may calculate the first value, and determine, based on the first value, whether to send the access request information. The "initiating the access request" may indicate that the terminal device determines, based on the first value, whether to send the access request.

Determining of the time interval T is not limited.

For example, the time interval T may be preset. In this example, if the first value obtained by the terminal device through calculation does not meet the first rule, the first value may be recalculated after the preset time interval T, and whether the first rule is met may be redetermined.

For another example, a plurality of time periods in which the terminal device is allowed to initiate the access request may be specified in advance. In this example, if the first value obtained by the terminal device through calculation in a current time period does not meet the first rule, the first value is recalculated in a next time period (or at an interval of X time periods, where X is an integer greater than or equal to 1), and whether the first rule is met is redetermined.

For another example, the terminal device may determine, based on an actual requirement, when to recalculate the first value and redetermine whether the first rule is met.

It should be understood that the foregoing example is an example for description. The application is not limited thereto. For example, the terminal device may be indicated, in another manner, when to reinitiate the access request.

Optionally, the first value is obtained through calculation based on the identification information of the terminal device and the digital signature of the access node.

Using the digital signature of the access node as one of calculation parameters can prevent the terminal device from forging the first value to meet an access condition. In addition, because identification information of each terminal device is unique to the terminal device, calculating the first value based on the digital signature of the access node and in combination with the identification information of the terminal device can ensure, as much as possible, that a first value calculated by each terminal device is difficult to forge, so that the terminal device and the access node can trust each other, thereby avoiding unauthorized access of a malicious node in the network.

The terminal device is used as an example. The terminal device may calculate the first value based on the identification information of the terminal device and the digital signature of the access node, and then the terminal device determines, based on the first value, whether to send the access request information. For example, the terminal device may obtain the digital signature of the access node, and then obtain the first value through calculation based on the identification information of the terminal device and the digital signature of the access node. The digital signature of the access node may be, for example, carried in the access control information, or may be separately sent by the access node to the terminal device. This is not limited.

The access node is used as an example. The access node may obtain the first value through calculation based on the identification information of the terminal device and the digital signature of the access node, so that the access node determines, based on the first value, whether the terminal device is capable of performing access. For example, the access node may obtain the identification information of the terminal device, and then obtain the first value through calculation based on the identification information of the terminal device and the digital signature of the access node. The identification information of the terminal device may be, for example, carried in the access request information. This is not limited.

That the first value is obtained through calculation based on the identification information of the terminal device and the digital signature of the access node may include: the first value is calculated by using a one-way function about the digital signature of the access node and the identification information of the terminal device.

For example, a calculation formula of the first value may be expressed as: first value=one-way function (the digital signature of the access node and the identification information of the terminal device). The one-way function may be, for example, an MD algorithm or an SH algorithm.

Because the one-way function has characteristics of a simple calculation method, a small calculation amount, and a unique and irreversible calculation result, the first value is calculated by using the one-way function, and then the first value is compared with the first threshold, so that a problem of excessively high calculation overheads caused by complex calculation such as data mining in the blockchain technology can be resolved, and the device in the network can fairly perform network access in an untrusted environment while overall network efficiency is improved.

It should be understood that the terminal device may further calculate the first value by using another function having a similar characteristic. This is not limited in the application.

It should be further understood that, when the first value is calculated, in addition to the identification information of the terminal device and the digital signature of the access point, one or more pieces of information of the identification information of the access node, the group identification information, and the timestamp may also be used as a parameter for calculating the first value. For example, the first value may be calculated based on the digital signature of the access node, the identification information of the terminal device, and the timestamp. In the case, the calculation formula of the first value may be expressed as: first value=a single function (the digital signature of the access node, the identification information of the terminal device, and the timestamp). The timestamp may be, for example, carried in the access control information in step S310, or may be separately sent by the access node to the terminal device, or may be agreed on in advance. This is not limited.

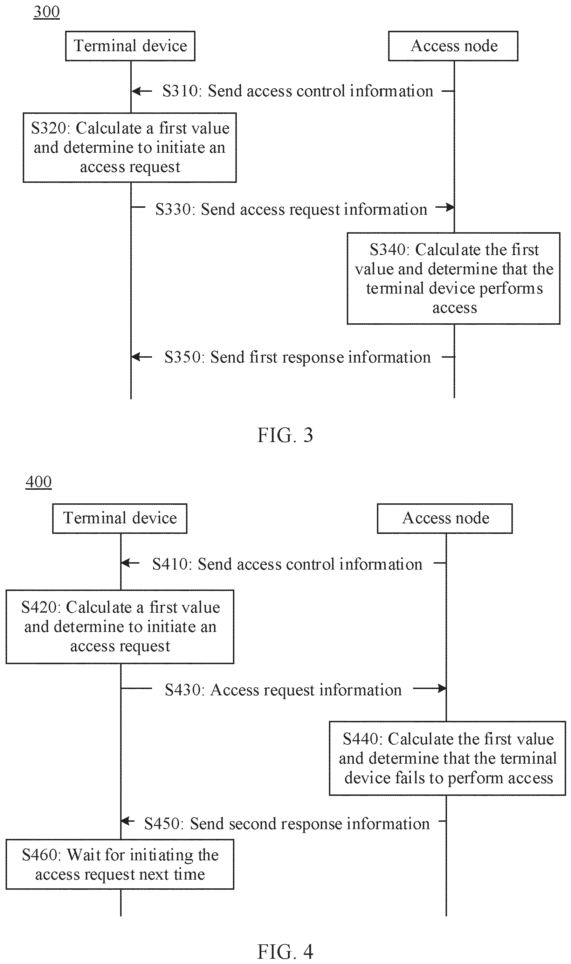

FIG. 3 is a schematic diagram of another communication network access method according to an embodiment of the application. For example, a method 300 may be used in a scenario in which a terminal device initiates an access request and an access node allows access of the terminal device. The method may include steps S310 to S350.

Step S310 is the same as step S210. For a specific implementation method, refer to the descriptions in FIG. 2. To avoid repetition, details are not described herein again.

S320: The terminal device calculates a first value, and then determines to initiate the access request.

In step S320, the terminal device calculates the first value, and determines, based on the first value, to initiate the access request. For example, if the first value meets a first rule, the terminal device determines to initiate the access request. A method for calculating the first value and a definition of the first rule are the same as those in the foregoing method in FIG. 2. To avoid repetition, details are not described herein again.

S330: The terminal device sends access request information to the access node. Correspondingly, the access node receives the access request information.

The access request information may be used by the access node to determine whether to allow access of the terminal device.

For example, the access request information may include identification information of the terminal device and/or a digital signature of the terminal device. The identification information of the terminal device may be used by the access node to calculate the first value, and the first value may be used by the access node to determine, in step S340, whether the terminal device is capable of performing access.

S340: The access node calculates the first value, and determines that the terminal device performs access.

For example, the access node calculates the first value based on a digital signature of the access node and the identification information of the terminal device. If the first value obtained through calculation meets the first rule, the access node determines, based on the access request of the terminal device, that the terminal device is capable of performing access, or that the terminal device is allowed to perform access.

The identification information of the terminal device may be, for example, carried in the access request information, or may be separately sent by the terminal device to the access node. This is not limited.

It should be understood the parameter and the calculation method that are used in this step to calculate the first value should be consistent with the parameter and the calculation method that are used in step S320 by the terminal device to calculate the first value, to verify whether a calculation result of the terminal device is correct, and further determine whether the terminal device meets an access condition. By verifying whether the calculation result of the terminal device is correct, a second barrier that prevents unauthorized access of a malicious node can be formed.

Optionally, the access node determines, based on the first value and a time-frequency resource allocated to the terminal device, whether the terminal device is capable of performing access.

In a possible manner, when the first value obtained through calculation by the access node meets the first rule, and the time-frequency resource can be allocated to the terminal device, the access node determines that the terminal device is capable of performing access. When the access node determines whether the terminal device is capable of performing access, whether the access node is capable of allocating the time-frequency resource to the terminal device is one of consideration factors, so that a success rate of accessing a communication network by a terminal device that meets the access condition can be improved.

In step S350, the access node sends first response information to the accessed terminal device. Correspondingly, the terminal device receives the first response information.

The first response information may include information about the time-frequency resource allocated to the terminal device. In this way, if the terminal device successfully performs access, subsequent data transmission can be performed between the terminal device and the access node based on the time-frequency resource allocated by the access node.

Optionally, the first response information may further include information such as a current timestamp and the digital signature of the access node.

FIG. 4 is a schematic diagram of another communication network access method according to an embodiment of the application. For example, a method 400 may be used in a scenario in which a terminal device initiates an access request but an access node rejects access of the terminal device. The method may include steps S410 to S450.

Steps S410 to S430 are the same as steps S310 to S330. To avoid repetition, details are not described herein again.

S440: The access node calculates a first value, and determines that the terminal device fails to perform access.

For example, the access node calculates the first value based on a digital signature of the access node and identification information of the terminal device. If the first value obtained through calculation does not meet a first rule, the access node may reject the access request of the terminal device, and determine that the terminal device fails to perform access, or forbid the terminal device to perform access.

The identification information of the terminal device may be, for example, carried in the access request information, or may be separately sent by the terminal device to the access node. This is not limited.

S450: The access node sends second response information to the terminal device. Correspondingly, the terminal device receives the second response information. The second response information indicates the terminal device to wait for initiating the access request next time.

Optionally, the second response information may further include information such as a current timestamp and the digital signature of the access node.

S460: The terminal device waits, based on indication of the second response information, for initiating the access request next time.

For example, when the first value does not meet the first rule, the terminal device initiates the access request after a time interval T. The "initiating the access request" may indicate that the terminal device determines, based on the first value, whether to send the access request.

Determining of the time interval T is not limited.

For example, the time interval T may be preset. In this example, if the first value obtained by the terminal device through calculation does not meet the first rule, the first value may be recalculated after the preset time interval T, and whether the first rule is met may be redetermined.

For another example, a plurality of time periods in which the terminal device is allowed to initiate the access request may be specified in advance. In this example, if the first value obtained by the terminal device through calculation in a current time period does not meet the first rule, the first value is recalculated in a next time period (or at an interval of X time periods, where X is an integer greater than or equal to 1), and whether the first rule is met is redetermined.

For another example, the terminal device may determine, based on an actual requirement, when to recalculate the first value and redetermine whether the first rule is met.

It should be understood that the foregoing example is an example for description. The application is not limited thereto. For example, the terminal device may be indicated, in another manner, when to reinitiate the access request.

According to the foregoing solutions provided in the application, not only trusted access can be implemented, but also malicious behavior in a network can be avoided. This reduces access calculation overheads and ensures overall network efficiency.

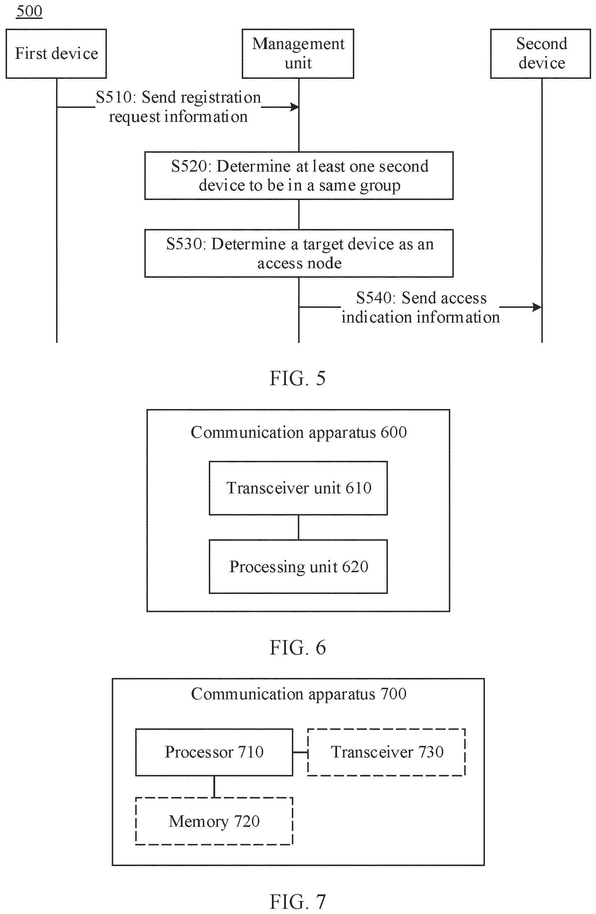

The foregoing describes the communication network access method according to embodiments of the application with reference to FIG. 2 to FIG. 4. The following describes an access node selection method with reference to FIG. 5.

It is assumed that a trust chain may be established between a plurality of entities. For example, a plurality of operators and a plurality of networks use a blockchain technology, and a plurality of devices that use a blockchain in a telecommunication network have formed a working group (a consortium blockchain), and may work together.

Based on the foregoing assumption, management and configuration may be performed in a form of a group. In a possible manner, a management unit (for example, the management unit 100 shown in FIG. 1) may establish different groups for devices in a network based on service requirements of the devices, to implement functions such as multi-device management and parameter configuration management in the network. For example, in FIG. 1, devices P101, P102, and P103 are determined to be in a same group, devices P104, P105, P106, and P107 are determined to be in a same group, and devices P108 and P102 are determined to be in a same group. Devices in the same group cooperate with each other to complete a business or provide a service.

Because some networks may contain devices from different operators or manufacturers, it is difficult to trust and cooperate with each other in this environment. In view of this, in embodiments, the blockchain technology may be used in the group, and all devices in the group may serve as blockchain participants, so that the devices in the group trust each other by using a natural trust attribute of the blockchain. This provides a trusted election environment for subsequent access node selection.

For example, in a structure, a main chain+sub-chain structure may be formed between the management unit (for example, the management unit 100 shown in FIG. 1) and groups established by the management unit. The main chain may be responsible for managing device membership in the group, monitoring a device situation of each group, and recording device behavior of each group. In addition to the groups established by the management unit 100 for the devices in the network, the sub-chain may further include an identification information chain, configured to store identification information of the foregoing devices.

Optionally, a parameter managed by the management unit (for example, the management unit 100 shown in FIG. 1) may include one or more of the following information: a blockchain structure, a chain structure, a consensus algorithm, an incentive mechanism, a contract template, and a performance constraint parameter.

FIG. 5 is a schematic diagram of an access node selection method according to an embodiment of the application. The following mainly uses execution of a method management unit (for example, the management unit 100 in FIG. 1) in FIG. 5 as an example for description. It may be understood that any unit, device, or module that can implement the function is applicable to embodiments of the application. The method in FIG. 5 may include steps S510 to S550.

S510: A first device in a network sends registration request information to a management unit. Correspondingly, the management unit receives the registration request information.

The registration request information may be, for example, used by each device to request to become a blockchain participant managed by the management unit.

For example, the registration request message may include one or more of the following information: identification information of the first device in the network, service information, and capability information of the first device. Specifically, the service information may include information related to a service that the device can provide or a service requirement that the device has. The capability information may include one or more of the following information: a computing capability, a communication capability, and a life cycle of the device. The life cycle of the device refers to duration in which the device can provide a service. The capability information may further include another capability of the device. This is not limited.

S520: The management unit determines that at least one second device is in a same group.

The management unit determines that at least one second device in the network is in the same group, to implement functions such as multi-device management and parameter configuration management in the network. For example, the management unit may manage device membership in the group, monitor the device situation of each group, and record device behavior of each group.

In a possible manner, after receiving the registration request information sent by the first device, the management unit may establish different groups for devices based on service requirements of the devices in the network. Devices that have same service requirements are determined to be in a same group. Devices in the same group cooperate and trust each other to complete a service or provide a service together. Optionally, the management unit may further group the devices in the network based on other information. This is not limited in the application.

In a possible manner, the blockchain technology may be used in the group, that is, all devices in the group may serve as blockchain participants, so that the devices in the group trust each other by using a natural trust attribute of the blockchain. This provides a trusted election environment for subsequent access node selection.

S530: The management unit determines a target device as an access node.

Second devices exchange information with each other. After information exchange is completed, the management unit may determine, based on capability information of each second device, one target device as the access node of the group. For example, the capability information may include one or more of the following information: the computing capability, the communication capability, and the life cycle of the device. The life cycle of the device refers to duration in which the device can provide a service.

S540: The management unit sends access indication information to the second device. Correspondingly, the second device receives the access indication information.

The access indication information may, for example, indicate that the target device serves as an access node of the second device. For example, the access indication information may include group identification information and/or identification information of the access node. The group identification information may indicate a group to which the second device belongs to the second device, and the identification information of the access node may indicate that the target device is a specified access node of the group. In a subsequent access process, the second device may access the specified access node based on the access indication information.

It may be understood that the examples in FIG. 3 to FIG. 5 in embodiments of the application are provided merely for helping a person skilled in the art understand embodiments of the application, instead of limiting embodiments of the application to specific scenarios shown in the examples. Apparently, a person skilled in the art can make various equivalent modifications or changes based on the examples shown in FIG. 3 to FIG. 5, and such modifications or changes also fall within the scope of embodiments of the application.

It may be further understood that some optional features in embodiments of the application may be independent of other features in some scenarios, or may be combined with other features in some scenarios. This is not limited.

It may be further understood that the solutions in embodiments of the application may be appropriately combined for use, and explanations or descriptions of terms in embodiments may be mutually referenced or explained in embodiments. This is not limited.

It may be further understood that various numeric sequence numbers in embodiments of the application do not mean execution sequences, but are merely for differentiation for ease of description, and therefore should not constitute any limitation on implementation processes of embodiments of the application.

It may be further understood that some message names are involved in embodiments of the application, and the names do not limit the protection scope of embodiments of the application.

It may be further understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It may be further understood that, in the foregoing method embodiments, the methods and operations implemented by the terminal device may alternatively be implemented by a component (for example, a chip or a circuit) that may be composed of the terminal device. In addition, the methods and operations implemented by the access node may alternatively be implemented by a component (for example, a chip or a circuit) that may be composed of the access node. This is not limited.

Corresponding to the methods provided in the foregoing method embodiments, an embodiment of the application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

FIG. 6 is a schematic block diagram of a communication apparatus 600 according to an embodiment of the application. The communication apparatus 600 includes a transceiver unit 610 and a processing unit 620. The transceiver unit 610 may be configured to implement a corresponding communication function. The transceiver unit 610 may also be referred to as a communication interface or a communication unit. The processing unit 620 may be configured to implement a corresponding processing function, for example, calculating a first value.

Optionally, the apparatus 600 may further include a storage unit. The storage unit may be configured to store instructions and/or data. The processing unit 620 may read the instructions and/or the data in the storage unit, to enable the apparatus to implement actions of the terminal device or the access node in the foregoing method embodiments.

In a first design, the apparatus 600 may be the terminal device in the foregoing embodiments, or may be a component (for example, a chip) of the terminal device. The apparatus 600 may implement steps or procedures performed by the terminal device in the foregoing method embodiments. The transceiver unit 610 may be configured to perform operations related to receiving and sending of the terminal device in the foregoing method embodiments. The processing unit 620 may be configured to perform operations related to processing of the terminal device in the foregoing method embodiments. When the apparatus 600 is a terminal device, the transceiver unit 610 may be a transceiver or an input/output interface, and the processing unit 620 may be at least one processor. Optionally, the transceiver may be a transceiver circuit. Optionally, the input/output interface may be an input/output circuit. When the apparatus 600 is a chip, a chip system, or a circuit used in the terminal device, the transceiver unit 610 may be an input/output interface, an interface circuit, an output circuit, an input circuit, a pin, a related circuit, or the like on the chip, the chip system, or the circuit; and the processing unit 620 may be at least one processor, a processing circuit, a logic circuit, or the like.

In a possible implementation, the transceiver unit 610 is configured to receive access control information sent by an access node, where the access control information includes a digital signature of the access node; and the processing unit 620 is configured to calculate the first value based on the digital signature of the access node and identification information of the terminal device, and is further configured to determine, based on the first value, whether to send access request information.

Optionally, when the processing unit 620 is configured to determine that the first value meets a first rule, the transceiver unit 610 is further configured to send access request information to the access node, where the access request information includes the identification information of the terminal device.

Optionally, when the terminal device initiates an access request and the access node allows access of the terminal device, the transceiver unit 610 is further configured to receive first response information sent by the access node, where the first response information includes information about a time-frequency resource allocated by the access node to the terminal device.

Optionally, when the processing unit 620 is configured to determine that the first value does not meet a first rule, the terminal device waits for initiating an access request next time.

Optionally, the first rule may include: The first value is less than a first threshold.

Optionally, the processing unit 620 is configured to calculate the first value based on a one-way function about the digital signature of the access node and the identification information of the terminal device.

Optionally, the access control information further includes one or more of the following information: the first threshold, identification information of the access node, group identification information, and a timestamp.

In a second design, the apparatus 600 may be the access node in the foregoing embodiments, or may be a component (for example, a chip) of the access node. The apparatus 600 may implement steps or procedures performed by the access node in the foregoing method embodiments. The transceiver unit 610 may be configured to perform operations related to receiving and sending of the access node in the foregoing method embodiments. The processing unit 620 may be configured to perform operations related to processing of the access node in the foregoing method embodiments. When the apparatus 600 is the access node, the transceiver unit 610 may be a transceiver or an input/output interface, and the processing unit 620 may be at least one processor. Optionally, the transceiver may be a transceiver circuit. Optionally, the input/output interface may be an input/output circuit. When the apparatus 600 is a chip, a chip system, or a circuit used in the access node, the transceiver unit 610 may be an input/output interface, an interface circuit, an output circuit, an input circuit, a pin, a related circuit, or the like on the chip, the chip system, or the circuit; and the processing unit 620 may be at least one processor, a processing circuit, a logic circuit, or the like.

In a possible implementation, the transceiver unit 610 is configured to send access control information to a terminal device, where the access control information includes a digital signature of the access node; the transceiver unit 610 is further configured to receive access request information sent by the terminal device, where the access request information includes identification information of the terminal device; the processing unit 620 is configured to calculate a first value based on the identification information of the terminal device and the digital signature of the access node; and the processing unit 620 is further configured to determine, based on the first value, whether the terminal device is capable of performing access.

Optionally, when the first value meets a first rule, the processing unit 620 is configured to determine that the terminal device is capable of performing access.

Optionally, when the first value meets the first rule, and the access node is capable of allocating a time-frequency resource to the terminal device, the processing unit 620 is configured to determine that the terminal device is capable of performing access.

Optionally, when the terminal device initiates an access request and the access node allows access of the terminal device, the transceiver unit 610 is further configured to send first response information to the terminal device, where the first response information includes information about the time-frequency resource allocated by the access node to the terminal device.

Optionally, the first rule may include: The first value is less than a first threshold.

Optionally, the processing unit 620 is configured to calculate the first value based on a one-way function about the digital signature of the access node and the identification information of the terminal device.

Optionally, the access control information further includes one or more of the following information: the first threshold, identification information of the access node, group identification information, and a timestamp.

It should be understood that a specific process in which the units perform the foregoing corresponding steps is described in detail in the foregoing method embodiments, and for brevity, details are not described herein.

It should be understood that, the apparatus 600 herein is presented in a form of function units. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 600 may be specifically the terminal device in the foregoing embodiments, and may be configured to perform the procedures and/or steps corresponding to the terminal device in the foregoing method embodiments. Alternatively, the apparatus 600 may be specifically the access node in the foregoing embodiments, and may be configured to perform the procedures and/or steps corresponding to the access node in the foregoing method embodiments. To avoid repetition, details are not described herein again.

The apparatus 600 in each of the foregoing solutions has a function of implementing corresponding steps performed by a device (for example, the terminal device or the access node) in the foregoing method. The function may be implemented by hardware, or may be implemented by hardware by executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver). Another unit, such as a processing unit, may be replaced by a processor to separately perform a sending and receiving operation and a related processing operation in each method embodiment.

In addition, the transceiver unit 610 may alternatively be a transceiver circuit (which may include, for example, a receiving circuit and a sending circuit), and the processing unit may be a processing circuit.

It should be noted that the apparatus in FIG. 6 may be the device in the foregoing embodiments, or may be a chip or a chip system, for example, a system on chip (system on chip, SoC). The transceiver unit may be an input/output circuit and/or a communication interface. The processing unit is an integrated processor, a microprocessor, or an integrated circuit on the chip. This is not limited herein.

As shown in FIG. 7, an embodiment of the application further provides another communication apparatus 700. The apparatus 700 includes a processor 710. The processor 710 is configured to execute a computer program or instructions stored in a memory 720, or read data/signaling stored in the memory 720, to perform the methods in the foregoing method embodiments. Optionally, there are one or more processors 710.

Optionally, as shown in FIG. 7, the apparatus 700 further includes the memory 720. The memory 720 is configured to store a computer program or instructions and/or data. The memory 720 may be integrated with the processor 710, or may be disposed separately. Optionally, there are one or more memories 720.

Optionally, as shown in FIG. 7, the apparatus 700 may further include a transceiver 730. The transceiver 730 is configured to receive and/or send signals. For example, the processor 710 is configured to control the transceiver 730 to receive and/or send the signal.

In a solution, the apparatus 700 is configured to implement operations performed by the terminal device in the foregoing method embodiments.

For example, the processor 710 is configured to execute the computer program or the instructions stored in the memory 720, to implement related operations of the terminal device in the foregoing method embodiments.

In another solution, the apparatus 700 is configured to implement operations performed by the access node in the foregoing method embodiments.

For example, the processor 710 is configured to execute the computer program or the instructions stored in the memory 720, to implement related operations of the access node in the foregoing method embodiments.

It should be understood that, the processor mentioned in embodiments of the application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It should be further understood that the memory mentioned in embodiments of the application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification aims to include but is not limited to these memories and any memory of another appropriate type.

An embodiment of the application further provides a computer-readable storage medium. The computer readable storage medium stores computer instructions that are used to implement the methods performed by the device in the foregoing method embodiments.

For example, when a computer program is executed by a computer, the computer is enabled to implement the methods performed by the access node in the foregoing method embodiments.

For another example, when a computer program is executed by a computer, the computer is enabled to implement the methods performed by the terminal device in the foregoing method embodiments.

An embodiment of the application further provides a computer program product, including instructions. When the instructions are executed by a computer, the method performed by the device in the foregoing method embodiments is implemented.

An embodiment of the application further provides a communication system, including the foregoing access node and terminal device.

For explanations and beneficial effect of related content of any one of the apparatuses provided above, refer to the corresponding method embodiment provided above. Details are not described herein again.

In the several embodiments provided in the application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

All or some of the foregoing embodiments may be implemented by using software, hardware, firmware, or any combination thereof. When software is used for implementation, all or part of the implementation may be implemented in a form of a computer program product. The computer program product includes one or more computer instructions. When the computer program instructions are loaded and executed on a computer, the procedure or functions according to embodiments of the application are all or partially generated. The computer may be a general-purpose computer, a dedicated computer, a computer network, or another programmable apparatus. For example, the computer may be a personal computer, a server, or a network device. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device like a server or a data center integrated with one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of the application, but are not intended to limit the protection scope of the application. Any variation or replacement readily figured out by a person skilled in the art within the technical scope disclosed in the application shall fall within the protection scope of the application. Therefore, the protection scope of the application shall be subject to the protection scope of the claims.

## Claims

1. A communication network access method, comprising:
receiving, by a terminal device, access control information sent by an access node, wherein the access control information comprises a digital signature of the access node;
calculating, by the terminal device, a first value based on the digital signature of the access node and identification information of the terminal device; and
determining, by the terminal device based on the first value, whether to send access request information.

2. The method according to claim 1, wherein the determining, by the terminal device based on the first value, whether to send access request information comprises:
when the first value meets a first rule, sending, by the terminal device, the access request information to the access node, wherein the access request information comprises the identification information of the terminal device.

3. The method according to claim 2, wherein the method further comprises:
receiving, by the terminal device, first response information sent by the access node, wherein the first response information comprises information about a time-frequency resource allocated by the access node to the terminal device.

4. The method according to claim 1, wherein the determining, by the terminal device based on the first value, whether to send access request information comprises:
when the first value does not meet a first rule, waiting, by the terminal device, for initiating an access request next time.

5. The method according to any one of claims 2 to 4, wherein the first rule comprises: the first value is less than a first threshold.

6. The method according to any one of claims 1 to 5, wherein the calculating, by the terminal device, a first value based on the digital signature of the access node and identification information of the terminal device comprises:
calculating, by the terminal device, the first value based on a one-way function about the digital signature of the access node and the identification information of the terminal device.

7. The method according to any one of claims 1 to 6, wherein the access control information further comprises one or more of the following information:
the first threshold, identification information of the access node, group identification information, and a timestamp.

8. A communication network access method, comprising:
sending, by an access node, access control information to a terminal device, wherein the access control information comprises a digital signature of the access node;
receiving, by the access node, access request information sent by the terminal device, wherein the access request information comprises identification information of the terminal device;
calculating, by the access node, a first value based on the identification information of the terminal device and the digital signature of the access node; and
determining, by the access node based on the first value, whether the terminal device is capable of performing access.

9. The method according to claim 8, wherein the determining, by the access node based on the first value, whether the terminal device is capable of performing access comprises:
when the first value meets a first rule, determining, by the access node, that the terminal device is capable of performing access.

10. The method according to claim 9, wherein
when the first value meets the first rule, the determining, by the access node, that the terminal device is capable of performing access comprises:
when the first value meets the first rule, and the access node is capable of allocating a time-frequency resource to the terminal device, determining, by the access node, that the terminal device is capable of performing access.

11. The method according to claim 9 or 10, wherein the method further comprises:
sending, by the access node, first response information to the terminal device, wherein the first response information comprises information about the time-frequency resource allocated by the access node to the terminal device.

12. The method according to any one of claims 9 to 11, wherein the first rule comprises: the first value is less than a first threshold.

13. The method according to any one of claims 8 to 12, comprising: calculating, by the access node, the first value based on a one-way function about the identification information of the terminal device and the digital signature of the access node.

14. The method according to any one of claims 8 to 13, wherein the access control information further comprises one or more of the following information:
the first threshold, identification information of the access node, group identification information, and a timestamp.

15. A terminal device, comprising a transceiver unit and a processing unit, wherein
the transceiver unit is configured to receive access control information sent by an access node, wherein the access control information comprises a digital signature of the access node;
the processing unit is configured to calculate a first value based on the digital signature of the access node and identification information of the terminal device; and
the processing unit is further configured to determine, based on the first value, whether to send access request information.

16. The terminal device according to claim 15, wherein
when the processing unit is configured to determine that the first value meets a first rule, the transceiver unit is further configured to send the access request information to the access node, wherein the access request information comprises the identification information of the terminal device.

17. The terminal device according to claim 16, wherein
the transceiver unit is further configured to receive first response information sent by the access node, wherein the first response information comprises information about a time-frequency resource allocated by the access node to the terminal device.

18. The terminal device according to claim 15, wherein
when the processing unit is configured to determine that the first value does not meet a first rule, the terminal device waits for initiating an access request next time.

19. The terminal device according to any one of claims 16 to 18, wherein the first rule comprises: the first value is less than a first threshold.

20. The terminal device according to any one of claims 15 to 19, wherein
the processing unit is configured to calculate the first value based on a one-way function about the digital signature of the access node and the identification information of the terminal device.

21. The terminal device according to any one of claims 15 to 20, wherein the access control information further comprises one or more of the following information:
the first threshold, identification information of the access node, group identification information, and a timestamp.

22. An access node, comprising a transceiver unit and a processing unit, wherein
the transceiver unit is configured to send access control information to a terminal device, wherein the access control information comprises a digital signature of the access node;
the transceiver unit is further configured to receive access request information sent by the terminal device, wherein the access request information comprises identification information of the terminal device;
the processing unit is configured to calculate a first value based on the identification information of the terminal device and the digital signature of the access node; and
the processing unit is further configured to determine, based on the first value, whether the terminal device is capable of performing access.

23. The access node according to claim 22, wherein
when the first value meets a first rule, the processing unit is configured to determine that the terminal device is capable of performing access.

24. The access node according to claim 23, wherein
when the first value meets the first rule, and the access node is capable of allocating a time-frequency resource to the terminal device, the processing unit is configured to determine that the terminal device is capable of performing access.

25. The access node according to claim 24, wherein
the transceiver unit is further configured to send first response information to the terminal device, wherein the first response information comprises information about the time-frequency resource allocated by the access node to the terminal device.

26. The access node according to any one of claims 23 to 25, wherein the first rule comprises: the first value is less than a first threshold.

27. The access node according to any one of claims 22 to 26, wherein
the processing unit is configured to calculate the first value based on a one-way function about the identification information of the terminal device and the digital signature of the access node.

28. The access node according to any one of claims 22 to 27, wherein the access control information further comprises one or more of the following information:
the first threshold, identification information of the access node, group identification information, and a timestamp.

29. A computer-readable storage medium, wherein the computer-readable storage medium stores a computer program, and when the computer program is run on a computer, the computer is enabled to perform the method according to any one of claims 1 to 7, or the computer is enabled to perform the method according to any one of claims 8 to 14.

30. A computer program product, wherein the computer program product comprises instructions used to perform the method according to any one of claims 1 to 7, or the computer program product comprises instructions used to perform the method according to any one of claims 8 to 14.

31. A communication device, comprising a processor, wherein the processor is configured to invoke a computer program from a memory and run the computer program, so that the communication device performs the method according to any one of claims 1 to 7 or the communication device performs the method according to any one of claims 8 to 14.

32. The communication device according to claim 31, wherein
the communication device further comprises the memory; and/or
the communication device further comprises a communication interface, and the processor is configured to read the computer program in the memory through the communication interface.

33. The communication device according to claim 31 or 32, wherein the communication device is a chip.

34. A communication system, comprising the terminal device according to any one of claims 15 to 21 and the access node according to any one of claims 22 to 28.
